Europäisches Patentamt

(19) European Patent Office

Office européen des brevets

(11) Publication number: **0 072 773**

**A2**

# (12) EUROPEAN PATENT APPLICATION

(21) Application number: **82810302.8**

(22) Date of filing: **13.07.82**

(51) Int. Cl.³: **G 02 B 7/26**

(30) Priority: **14.08.81 US 293081**

(43) Date of publication of application:
**23.02.83 Bulletin 83/8**

(84) Designated Contracting States:
**CH DE FR GB IT LI**

(71) Applicant: **Automatic Connector, Inc.**
**400 Moreland Road**
**Commack, N.Y. 11725(US)**

(72) Inventor: **Moreillon, René**
**9, Laurel Lane**
**Commack , N.Y. 11725(US)**

(74) Representative: **Klein, André Gilbert**
**Société Générale de l'Horlogerie Suisse S.A. ASUAG 6,**
**Faubourg du Lac**
**CH-2501 Biel/Bienne(CH)**

(54) Fiber optic connector with separable alignment nose.

(57) A fiber optic connector as disclosed comprising a connector body (1) and a plurality of alignment noses (9) adapted to be connected to the body. The alignment noses are of more precise dimensioning as all critical dimensions are limited in the alignment nose and the connector body may be used to fit a plurality of different sizes of optic fibers.

FIG. 1

EP 0 072 773 A2

# FIBER OPTIC CONNECTOR WITH SEPARABLE ALIGNMENT NOSE

This invention relates to fiber optic connectors suitable for various bundle optic fibers or single optic fibers, and more particularly, to precision connectors employed for fibers having diameters less than 0.25 mm (250 $\mu$).

Fiber optic connectors serve to align mating ends of fibers. The terminal ends of the fibers must be axially and angularly aligned and as close together as possible without touching to achieve highest possible light transfer. The amount of misalignment and the gap sizes are much smaller than fiber diameters. Therefore, tolerances of the connector parts aligning the fiber have to be very precise and mainly near the mating face of the connector.

Such precise tolerances are especially critical for small size fibers, for which the mating end of the connector have to be drilled to get a hole diameter as small as 125$\mu$. This is because standard screw machine techniques which have been greatly refined by aligned industries in making small precise parts are insufficient for very small fiber sizes. For fibers with diameters less than 250 $\mu$ the holes are so small and tolerances required so precise that such machining becomes very hazardous and expensive.

Generally, fiber optic connectors are formed of mating elements which bring mating faces close together without touching. Since precision is required for these connectors, the coupling elements are manufactured with most tolerances held to the most limiting of the other tolerances. Thus, if great precision is required at one the other tolerances. Thus, if great precision is required at one portion of the mating element, such precision is generally found elsewhere on the element. This leads to complex and time consuming manufacturing techniques, which contributes to the cost of the connector.

Generally, in fiber optic communication systems a wide range of fiber optic diameters are employed, and connectors are required for each diameter employed. Each connector element generally is machined for each size fiber employed, and this requires manufacturing large numbers of different size connector elements in order to maintain a proper inventory. This is expensive and unwieldy.

One approach to accommodating different sized fibers with a standard housing is described in U.S. Patent No. 4,090,778 issued on May 23, 1978 in which reference is made to a co-pending patent application Ser. No. 679, 759, filed April 23, 1976, entitled "Termination of Optical Fibers", of M. J. Phillips and A. M. Crick. That application describes the use of a pierced watchmakers bearing jewel mounted on the end of a ferrule with the fiber end positioned in the jewel hole. Such jewels are available as standard components with hole sizes suitable for a wide range of fiber diameters, and outside diameters maintained within very close limits. In addition, the concentricity of the jewel hole to its outside diameter is accurately controlled.

This approach requires usually that sets of precise jewels be supplied to customers for custom fitting to specific fiber sizes. The care and handling employed with such jewels requires considerable skill and is often difficult to achieve. Additionally, great precision is required for the manufacture of the interconnected parts of the connector as the counterbore where the jewel is located has to be concentric with the outside diameter of the connector's body.

An object of this invention is to provide a fiber optic connector set for fibers single or bundle with various diameters but having its greatest advantages for single fibers with diameter below 250μ.

Another object of this invention is to provide such a connector which provides precision meeting and accurate centering of the connected fibers.

Still another object of this invention is to provide such a connector formed of an assembly readily adaptable to different size fibers.

Another object of this invention is to provide such a connector formed of an assembly in which the critical tolerances are concentrated on only one part of this assembly, this part being the alignement nose of the connector.

Still another object of this invention is to provide such a connector capable of easy assembly.

Other objects, advantages and features of this invention will become more apparent from the following description.

In accordance with the principles of this invention, the above objects are accomplished by providing a fiber optic connector formed of connecting members. Each member is formed as a two piece assembly comprising a body section and an alignment nose section. A coupling means is added to insure coupling through a coupling sleeve. The body section is fabricated with tolerances which are wider than those for the nose section. The nose section is precisely made and its concentricity and diameter tolerances are accurately the fibers can vary to accommodate a wide range of fiber sizes and is designed to then press fit onto a standard body. The tailoring down to a specific fiber diameter is accomplished by using the precision alignment nose which snap fits onto the body.

The aperture in the nose section may be as large as 1.15 mm for some common bundle fiber cable. For the more common single optic fiber, the aperture is smaller than $250\mu$ and may be as small as $125\mu$. Precise manufacturing techniques may be very easily employed for such small diameter aperture where the precision is limited to a separate small volume alignment nose part.

This invention presents a connector with a plurality of separable alignment noses each of the noses capable of being press onto or into the connector body. The body has a rear section with a diameter which fits the outside diameter of the cable jacket. The alignment nose has a front aperture with a diameter which fits the outside diameter of the optic fiber.

One advantage of this invention is that the same body can be manufactured for a plurality of optic fiber diameters. Only the alignment nose has to be machined according the outside fiber diameter. Then the nose is press fit onto or into the body.

One of the more significant advantages is for small fibers having diameters below $250\mu$. For such small fibers, the tolerances are so small that it is a great advantage to have a body with a separate alignment nose which contains the critical dimensions for which tolerances have to be very small. This allows for machining the nose with other precision techniques. That can be easily accomplished since the nose is a relatively small sized article.

Fig. 1 is a sectional view through an embodiment of the connector of this invention.

Fig. 2 is a sectional view of one embodiment of the alignment nose of the connector.

Fig. 3 is a sectional view through the connector according another embodiment of this invention.

Fig. 4 is a sectional view of another embodiment of the alignment nose of the connector.

Fig. 5 is a sectional view of mating elements of the connector of this invention.

This invention is applicable to connectors for bundle or single fibers with various diameters but has its greatest advantages for single fibers with diameter below 250μ. The following table presents diameter sizes of common fibers and tolerances of the size of the aperture of the connector through which the fiber passes. Additionally, the tolerance of the concentricity of the connector outside diameter with respect to the aperture is set forth. If those tolerances are met, insertion losses due to a misalignment will not exceed 1 db.

| Fiber Diameter<br>Microns | Tolerance<br>Diameter of Aperture<br>Microns | Concentricity<br>Microns |
|---|---|---|
| 125 | ±1.2 | 2·5 |
| 140 | ±2.5 | 5 |
| 230 | ± 5 | 7·5 |
| 300 | ± 10 | 10 |

Standard optical fibers widely used in the industry come in a variety of sizes, some of which are shown in the table above. These fibers are often made of a glass core with glass cladding. Others are with plastic cladding or plastic fibers with plastic cladding. The jacket carrying the fiber is generally becoming more standardized in order to standardize connectors, but for each standard jacket size, there are a plurality of different diameter fibers.

Standard manufacturing techniques for meeting the tolerances set forth in the table above are insufficient to manufacture connectors suitable for fibers with a diameter below 250μ. This is due to mechanical limitations of the screw machinery employed to manufacture such connectors.

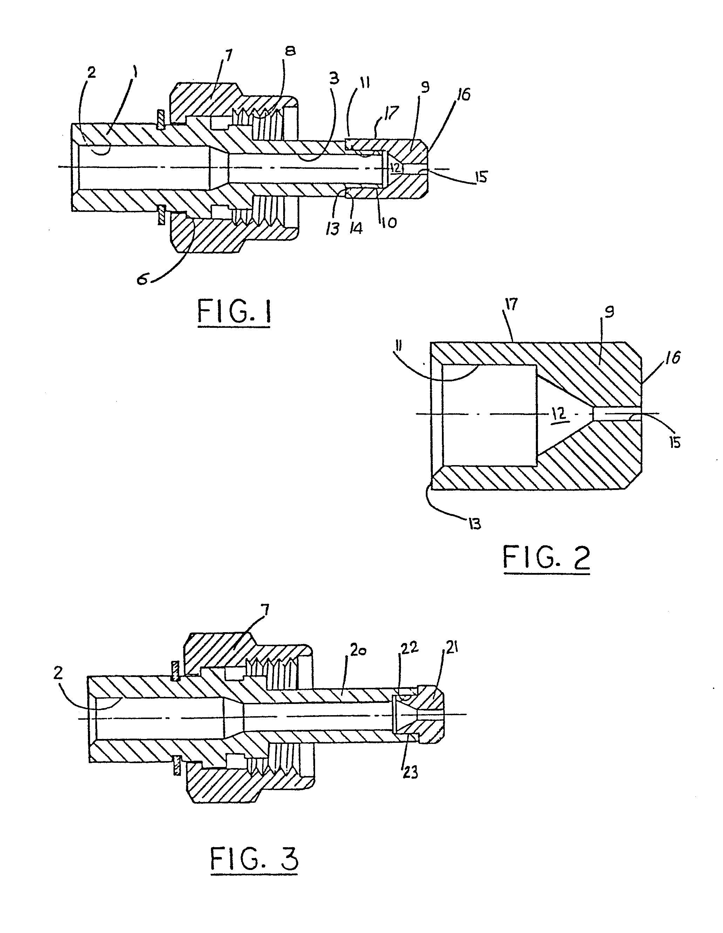

Fig. 1 illustrates an embodiment of the connector of this invention. There is shown a substantially cylindrical connector body 1 adapted to receive the fiber optic and sleeve with the inside diameter of the body having a rear enlarged segment 2 tapered down to a smaller segment 3. The body may be made of brass.

The body 1 is provided with a shoulder 6 approximately at its mid-section around which is fit a coupling nut 7 having internal threads 8 to ensure accurate coupling between respective members of the connector.

In accordance with the teachings of this invention, a separate component designated as an alignment or adapter nose 9 is provided which fits onto the reduced front section of the body 1. This fit is accomplished by providing the alignment nose 9 with a generally cylindrical shape fitting on a step 10 of the body 1. The diameter of this step 10 is slightly larger than the internal diameter 11 at the rear side of the nose 9. The rear face 13 of the nose 9 abuts a step 14 of the body 1. The inner surface of the alignment nose is tapered down to accommodate an appropriately small sized stripped optical fiber through an aperture or bore 15 at the front end 16 of the alignment nose.

The aperture 15 has a diameter which fits the external diameter of the optic fiber.

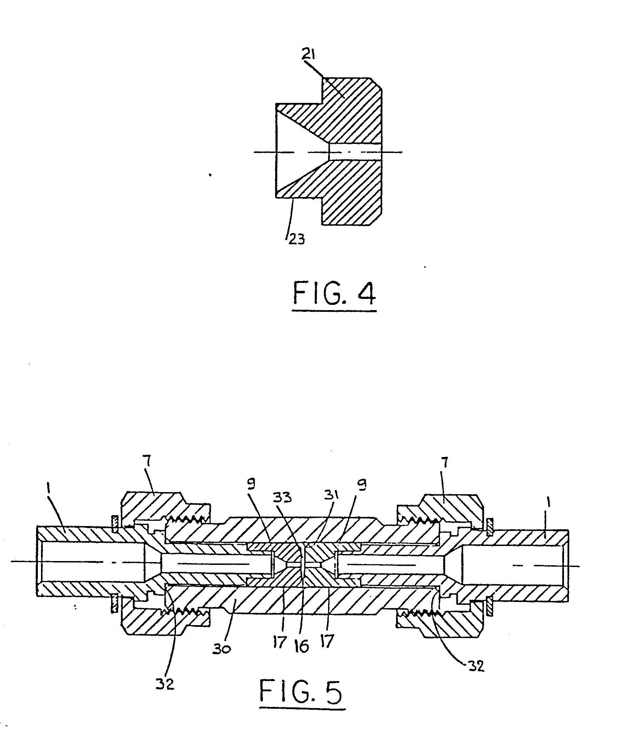

The alignment nose 9 has an outside diameter 17 concentric with the aperture 15 and tailored to fit the internal diameter 31 of a coupling sleeve 30 (see Fig. 5) to insure final mating of two connectors.

In accordance with the teachings of this invention, the tolerances for the aperture 15 including its concentricity with the diameter 17 can be much more precise, since the alignment nose is manufactured as a separate element of limited volume and dimensions.

Most fibers are manufactured with a tolerance of ±4% to ±6%. Since this invention is concerned with fibers as small as 125 μ, the actual fiber diameter may vary by ±7.5 μ. Therefore, it is impossible to have an alignment nose tailored to fit all the fibers having a given standard diameter. For the smallest fibers the gap between fiber outside diameter and the inner diameter of the nose aperture would be too large in regard of the tolerances allowable as described above.

This invention provides significant benefits in its enhanced flexibility of use. The user may purchase alignment noses having different diameters which are fabricated step by step around a given standard diameter. The user merely chooses the nose which fits the measured diameter of the fiber, and the nose is press fit onto the connector body. This flexibility in tailoring the connector to the actual fiber size by choosing the appropriately sized alignment nose is significant in view of the tolerances employed for standard fibers.

Fig. 2 illustrates a detailed view of the alignment nose 9 as used in the embodiment illustrated in Fig. 1.

Fig. 3 illustrates another embodiment of a connector according to the present invention.

An alignment nose 21 is fit into a counterbore 22 of the body 20. The fit is accomplished by providing the alignment nose 21 with a generally cylindrical shape having an inward step 23. The body 20 is provided with a counterbore 22 which has an inner diameter slightly smaller than the external diameter of the step 23 of the nose 21. In all other regards, the description of the connector body 1 for Fig. 1 is applicable to the embodiment of Fig. 3.

Fig. 4 illustrates a detailed view of the alignment nose 21 as used in the embodiment illustrated in Fig. 3. The alignment nose may be made of stainless steel but also of other material such as ceramic or hard metal.

Fig. 5 is a sectional view of two connectors coupled and aligned through an aligning sleeve 30, which is provided to mate the connectors. The inner diameter 31 of the sleeve 30 is tailored to fit the external diameter 17 of the alignment noses 9 which are press fit onto the body 1. The overall length of the aligning sleeve is slightly greater than twice the distance between a shoulder 32 of the body and the front face 16 of the nose to allow a small gap 33 between the two front ends of the two fibers. The alignment sleeve is provided with external threads at each end to allow coupling through the two coupling nuts 7.

The connector set of this invention is adapted to be used in bundle fiber cables as well as in single fiber cables. The assembled connector mates with an in-line or bulk-head adapter or with receptacles designed for electro-optic devices.

Although this invention has been described with several preferred embodiments, other embodiments may be developed which are within the scope of the described invention.

## C L A I M S

1. A fiber optic connector for aligning optic fibers of diameter of less than 250 microns in which the connector comprises a cylindrical body and at least one separable alignment nose connectable with said body, characterized in that said nose comprises an aperture in which said optic fiber is carried, the aperture being concentric with respect to the cylindrical body, the dimension of said aperture and said concentricity being formed of a first tolerance range, the dimensions of said connector body being formed of a second tolerance range, said second tolerance range being significantly wider than said first tolerance range and means to connect said at least one alignment nose to said body to maintain said concentricity tolerance within said first tolerance range.

2. A fiber optic connector as set forth in Claim 1, characterized in that it further comprises a set of said separable alignment noses, each of said alignment nose in said set comprising a different size aperture, such that a single connector body is used for optic fibers of different sizes by connecting a respective one of said alignment noses tailored to the measured size of the optic fiber.

3. A fiber optic connector as set forth in Claim 1, characterized in that said alignment nose is press fit to connect with said cylindrical body.

4. A fiber optic connector as set forth in Claim 3, characterized in that said alignment nose is press fit into said cylindrical body.

5. A fiber optic connector as set forth in Claims 1 or 2, characterized in that each said alignement nose comprises a generally cylindrical shape having an inward step on a rear portion thereof, said body comprising a counterbore having an inner diameter slightly smaller than the outer diameter of said step wherein said step of said alignment nose fits onto said counterbore of said connector body.

6. A fiber optic connector as set forth in Claims 1 or 2, characterized in that said alignment nose comprises a generally cylindrical shape having a shoulder formed in the rear end thereof, said body comprising a step in its front end, the diameter of said step being slightly larger than the internal diameter of said alignment nose in the region of said shoulder, whereby said inner diameter portion of said alignment nose at its rear end is press fit onto said step of said connector body at its front end.

7. A fiber optic connector as set forth in Claim 1, characterized in that said alignment nose is formed of stainless steel.

8. A fiber optic connector as set forth in Claim 1, characterized in that said alignement nose is formed of a ceramic material.

9. A fiber optic connector as set forth in Claim 1, characterized in that said alignment nose is formed of a hard metal material.

10. A method of fabricating a fiber optic connector characterized in which precise tolerances are required comprising forming a cylindrical connector body and at least one separable alignment nose, said alignement nose comprising an aperture through which said optic fiber passes, said aperture having a concentricity with respect to said connector body, fabricating said alignemnt nose with said precise tolerances, fabricating said connector body with a second tolerance range said second tolerance range being significantly wider than said precise tolerances.

11. The method of Claim 10, characterized in that it further comprises fabricating a plurality of separable alignment noses, each of said alignment noses comprising a differently sized aperture tailored to be measured size of measured optic fibers.

0072773

1/2

FIG. 1

FIG. 2

FIG. 3

FIG. 4

FIG. 5